# EUROPEAN PATENT SPECIFICATION

(11) **EP 4 290 114 B1**
(45) Date of publication and mention of the grant of the patent: **22.10.2025**
(21) Application number: 22177833.5
(22) Date of filing: 08.06.2022
(51) Int. Cl.: F16L 55/24, E03B 7/09, E03B 9/10

(54) **WATER SOCKET ARRANGEMENT**
WASSERDOSENANORDNUNG
AGENCEMENT DE PRISE D'EAU

(43) Date of publication of application: 13.12.2023
(73) Proprietor: Husqvarna AB, 561 82 Huskvarna (SE)
(72) Inventor: Kramer, Anna, 89284 Pfaffenhofen an der Roth (DE)
(74) Representative: Finkele, Rolf

(56) References cited:
- EP-A2- 2 438 242
- GB-A- 2 242 219
- KR-U- 20100 008 815
- US-A1- 2008 310 915

## Description

### TECHNICAL FIELD

The present disclosure relates to a water socket arrangement. More specifically, the present disclosure relates to an underground water socket arrangement for an irrigation system.

### BACKGROUND

An underground water socket arrangement is conventionally utilized for various domestic as well as industrial applications, such as, but not limited to, sprinkling of the gardens and the like. Such an arrangement includes a water socket embedded in the ground. The water socket is coupled with a watering component such as a tap, or a valve to carry out the applications as mentioned above. However, when there is no watering component coupled to the water socket, an interior of the water socket may be susceptible to unwanted foreign elements present in the surroundings of the underground water socket arrangement. The unwanted foreign elements, such as dirt, may accumulate in the interior of the water socket and may affect the functionality of the underground water socket arrangement.

Hence, there is a need for the underground water socket arrangement that may additionally include a cover on top of the water socket to prevent the interior of the water socket from the unwanted foreign elements when no watering component is fluidly coupled with the water socket.

An example of an underground water socket arrangement is provided in European patent 2,438,242 (hereinafter referred to as '242 reference). The '242 reference provides a shaft arrangement of a garden watering system which can accommodate a functional unit, such as a water tap connection. A cover closing an upper shaft opening may be displaced from the closed position into the open position and is at least partially recessed into the interior of the shaft housing when in the open position. However, the '242 reference seems short of disclosing an ergonomic design of the cover that may allow displacement of the cover from the closed state of the cover to the open state of the cover without the use of the fingers of an operator and may further prevent inadvertent finger injury to the operator.

A further example of an underground water application is provided in the British patent application GB 2 242 219 A (hereinafter referred to as '219 reference) which discloses a surface box which is designed to be mounted at the upper end of a bore or shaft such as may lead down to a water meter. The water meter is mounted on an underground water-supply pipe and is at the lower end of an upwardly-opening shaft lined with a cylindrical tube which constituted a liner and is disposed with its axis vertical. The surface box comprises a body which is formed with an opening through which access to the interior of the liner can be obtained. The surface box further comprises a lid with a notch. The notch in one end of the lid permits the insertion of a tool between the wall of the shaft and the lid to enable the user to raise that end of the lid when the lid is in its closed position. Therefore, the '219 reference discloses a design of the cover which may be opened by a specific and additional tool which has to be taken along separately by the user. However, the '219 reference seems short of disclosing an ergonomic design of the cover that may allow displacement of the cover from the closed state of the cover to the open state of the cover without the use of the fingers of an operator and without the need of an additional and separate tool and may further prevent inadvertent injury to the operator.

A further example of an underground water application is provided in the Korean utility model KR 2010 0008815 U (hereinafter referred to as '815 reference). The '815 reference discloses a waterwork meter utility manhole apparatus comprising a manhole frame and a manhole cover covering the manhole frame. The cover is made of a top plate part comprising a projection plate part protruding in a downward direction to form a space which can maintain a gap of an extent such that for opening the cover a hand or a foot of an operator may be inserted under a low surface edge of the top plate part. However, the '815 reference seems short of disclosing an ergonomic design of the cover that may allow displacement of the cover from the closed state of the cover to the open state of the cover without the use of the fingers or the feet of an operator and may further prevent inadvertent injury to the operator.

A further example of an underground water application is provided in the US patent application US 2008/0310915 A1 (hereinafter referred to as '915 reference). The '915 reference discloses an access conduit comprising a cover. The cover includes a base portion having a top surface. Disposed on the top surface is a knockout provision over a hole which enables a user to knockout a portion of the top surface to reveal a hole disposed therethrough. Further, the cover comprises a grasping tab that is useful in assisting an operator in lifting the cover from the conduit in/on which it is disposed. However, the '915 reference seems short of disclosing an ergonomic design of the cover that may allow displacement of the cover from the closed state of the cover to the open state of the cover without the use of the fingers of an operator and may further prevent inadvertent finger injury to the operator.

Thus, there is a need of an improved design of the cover for the underground water socket arrangement that may be easily and ergonomically be displaced from the closed state of the cover to the open state of the cover. Further, the cover may be designed in a manner such as to allow for overall compact design of the underground water socket arrangement.

### SUMMARY

In view of the above, it is an objective of the present invention to solve or at least reduce the drawbacks discussed above. The objective is at least partially achieved by an underground water socket arrangement. The underground water socket arrangement includes a water socket which is embeddable in the ground and a cover operatively coupled with the water socket. The cover includes an extension to allow displacement of the cover from a closed state of the cover to an open state of the cover such that in the open state of the cover, the cover provides access to an interior of the water socket. The extension includes a first protrusion and a second protrusion spaced apart from each other and extending away from the cover such that the first protrusion and the second protrusion along with an internal boundary of the extension spatially arranged between the first protrusion and the second protrusion forms a contour. The underground water socket arrangement is characterized in that the contour allows engagement of the extension with a watering component to be coupled with the water socket, wherein the contour provides a gripping surface to the watering component for lifting or displacing the cover.

Thus, the present disclosure provides the underground water socket arrangement that is embedded in the ground and includes the cover to prevent an ingress of unwanted foreign elements, such as, but not limited to, dirt or mud, into the interior of the water socket when the water socket is not fluidly coupled to any watering component for various industrial and domestic applications. The cover prevents the ingress of unwanted foreign elements into the interior of the water socket when the cover is in the closed state. The cover prevents the components such as, a coupling nipple, present in the water socket and the surrounding areas of the components from contamination with the foreign elements and allows for proper and secure coupling of the water socket with the watering components known and understood in the related art. The cover further prevents possible damage to the components present in the interior of the water socket.

The cover is easily and ergonomically displaced or lifted from the closed state of the cover to the open state of the cover. The cover includes the extension with the first protrusion and the second protrusion spaced apart from each other and extending away from the cover such that the first protrusion and the second protrusion along with an internal boundary of the extension spatially arranged between the first protrusion and the second protrusion forms a contour. The contour allows engagement of the extension with the watering component, such as a hose connector. The watering component when pressed with the contour firmly engages with the contour to lift or displace the cover from the closed state of the cover to the open state of the cover. The depth of the extension or the contour is small enough to keep the design of the underground water socket arrangement compact and large enough to be gripped by the portion of the watering component. An operator operating the underground water socket arrangement is not required to use fingers to lift the cover and hence the operator is prevented from inadvertent injuries that may occur while applying force to lift or displace the cover.

According to an embodiment of the present disclosure, the first protrusion and the second protrusion are arranged at extremes of the extension. However, in some embodiments, the first protrusion and the second protrusion are arranged between the extremes of the extension. The first protrusion and the second protrusion may be tactically arranged on the extension as per the application requirements. The arrangement may be such that the watering component to be coupled with the water socket may be conveniently utilized for lifting the cover from the closed state of the cover to the open state of the cover. The contour as discussed above may be able to provide proper gripping surface to the watering component for lifting or displacing the cover. However, in some embodiments of the present disclosure, the watering component may not require the complete contour for gripping.

According to an embodiment of the present disclosure, the first protrusion and the second protrusion are linearly arranged with the extension. However, in some embodiments, the first protrusion and the second protrusion are angularly arranged with the extension. The orientation of the first protrusion and the second protrusion relative to one another and relative to the extension may depend upon the application requirements and the feasibility constraints. However, to improve the versatility of the product, the first protrusion and the second protrusion may be manually adjusted and locked when arranged in the most desired and productive position.

According to an embodiment of the present disclosure, the extension includes a further protrusion arranged between the first protrusion and the second protrusion. This further protrusion adds to the versatility of the extension. The elevated protrusion allows to bring the cover from the closed state of the cover to the open state of the cover by use of finger of the operator. This protrusion is permanently or removably coupled to the extension. The elevated protrusion further acts as a barrier against the unwanted foreign elements present in the environment and further ensure the prevention of entry of the unwanted foreign elements into the interior of the water socket.

According to an embodiment of the present disclosure, the protrusion is at least partially elevated in respect to the annular surface (150) and/or the rim (154) to form a free space between them. The free space of this further protrusion is just enough to provide the gripping surface or undercut for the finger or a finger nail of the operator.

According to an embodiment of the present disclosure, the elevated protrusion is semi-circular in shape. The semi-circular shape conforms somewhat to the shape of the finger of the operator and thus makes its application easy and ergonomic for the operator. However, any other shape is within the scope of the present disclosure.

According to an embodiment of the present disclosure, the cover is pivotably coupled with the water socket. The cover is pivotably coupled with the water socket and remains connected to the water socket at all the times thereby preventing misplacement of the cover or loss of the cover.

According to an embodiment of the present disclosure, the cover in open state is at least partially displaced to the interior of the water socket. The cover at least partially displaces inside the water socket such that the cover does not interfere with the fluid coupling between the water socket and the watering component. In some embodiments of the present disclosure, the water socket is fluidly coupled with the hose connector. The hose connector may further be connected to a hose for transfer of water for various domestic as well as industrial applications such as gardening, firefighting etc. Further, the hose connector engages with the extension to displace the cover from the closed state of the cover to the open state of the cover.

According to an embodiment of the present disclosure, the cover automatically displaces from the open state of the cover to the closed state of the cover by virtue of a plurality of springs when the water socket is not fluidly coupled to a watering component. The automatic closing of the cover in the absence of any obstruction in the path of the cover due to the fluid connection between the water socket and the watering component prevents dirt accumulation in the water socket. Further, the operator may not have to remember to close the cover every time after the end of the watering application.

According to an embodiment of the present disclosure, the water socket includes a filter chamber disposed proximate to a water inlet of the water socket. The filter chamber filters the water received from a water source and removes all the unwanted foreign elements from the water before the water is further transferred to the watering component for carrying out wide range of watering applications, such as, but not limited to, sprinkling of lawns.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of an underground water socket arrangement with a cover in a closed state, in accordance with an aspect of the present disclosure;
**FIG. 2** shows a perspective view of an underground water socket arrangement with a cover in an open state, in accordance with an aspect of the present disclosure;
**FIG. 3** shows a side view of a plurality of springs coupled with a cover, in accordance with an aspect of the present disclosure.
**FIGS. 4A** and **4B** show a schematic view of an arrangement of a first protrusion and a second protrusion with an extension, in accordance with an aspect of the present disclosure; and
**FIGS. 5A** and **5B** show the schematic view of **FIGS. 4A** and **4B** with an elevated protrusion, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "first," "second," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

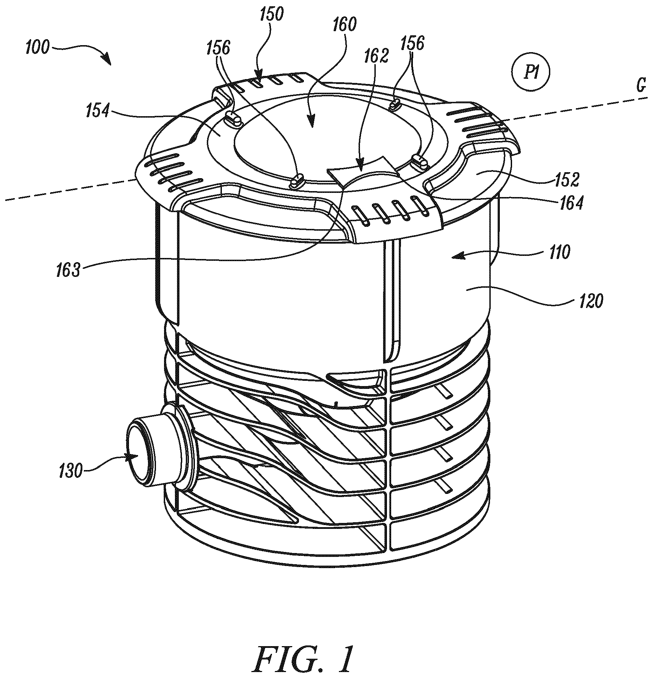

**FIG. 1** illustrates an underground water socket arrangement **100.** The underground water socket arrangement **100** of the present disclosure is used for the distribution of water for very domestic as well as industrial applications, such as, but not limited to, gardening, and the like. However, such underground arrangement of the socket may be employed for distribution of any other fluid without limiting the scope of the present disclosure in any manner.

The underground water socket arrangement **100** includes a water socket **110** which is embedded in the ground "G". The water socket **110** does not interfere with the movement of an operator on the ground "G" and hence the operator is protected from an inadvertent fall or injury. The water socket **110** allows discharge of water from a water source (not shown). The water socket **110** includes a body **120.** The body **120** of the present disclosure is cylindrical in shape. However, the body **120** may have any other shape and size known in the art without limiting the scope of the present disclosure. The body **120** includes hollow spaces internally to fit-in various necessary accessories for operation of the underground water socket arrangement **100.**

The body **120** includes a water inlet **130** for receiving water from the water source. The water inlet **130** may be fluidly coupled with the water source via a series of pipes (not shown) embedded in the ground "G". In some embodiments, the water source may be an underground water reservoir (not shown). However, the water source may be any other water source known in the art. Further, the water source may be housed above or below the ground "G" by any means known in the art.

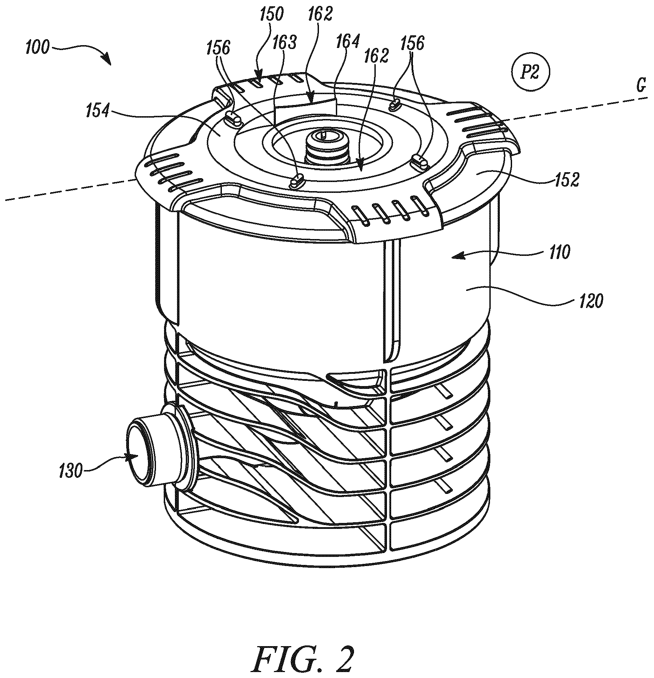

The body **120** includes a coupling nipple **140** (as shown in **FIG. 2****).** The coupling nipple **140** and the water inlet **130** are internally connected by a network of pipes to discharge water received from the water source to a watering component (not shown) fluidly coupled with the water socket **110** for various industrial as well domestic applications. For purpose of understanding of the present disclosure, the functional component is a hose connector. Further, for the remaining part of the disclosure, the watering component will be interchangeably referred to as the hose connector. The water socket **110** is fluidly coupled with the hose connector. The hose connector may further be connected to a hose for transfer of water for various domestic as well as industrial applications such as gardening, firefighting etc. However, in actual practice of the present disclosure, the water component may be any other watering component that may be fluidly coupled to the water socket for the water distribution. For example, the watering component may be a muti-way distributor having one inlet and multiple outlets, or a watering computer.

In some embodiments, the water socket **110** includes a filter chamber (not shown) disposed proximate to the water inlet **130** of the water socket **110.** The filter chamber filters the water received from the water source and removes all the unwanted foreign elements from the water before the water is further transferred to the hose connector for carrying out wide range of watering applications, such as, but not limited to, sprinkling of lawns.

Further, in some embodiments, the coupling nipple **140** may be designed in a manner such that when the coupling nipple **140** is fluidly coupled with the hose connector (or the watering component), the coupling nipple **140** may allow the water from the water inlet **130** to flow towards the hose connector. Furthermore, when the coupling nipple **140** is not fluidly coupled with the hose connector, the coupling nipple **140** may disallow the water from the water inlet **130** to flow towards the hose connector.

The body **120,** as shown in **FIGS. 1** and **2****,** further includes an annular surface **150.** The annular surface **150** includes a housing ring **152** that form the top peripheral covering body for the water socket **110.** The annular surface **150** may further provide strength and stability to the body **120** of the water socket **110.** The annular surface **150** may be coupled to the body **120** by any means known in the related art without limiting the scope of the present disclosure in any manner. The annular surface **150** further includes a rim **154.** The rim **154** can further include a plurality of protrusions **156.** The plurality of protrusions **154** are strategically placed at different positions on the rim **154** such that the plurality of protrusions **154** encloses the fluid coupling between the coupling nipple **140** and the hose connector. The plurality of protrusions **154** may prevent the decoupling of the coupling between the coupling nipple **140** and the hose connector by providing sideways support to the coupling. The of protrusions **154** may prevent the inadvertent decoupling of the coupling between the coupling nipple **140** and the hose connector due to strong winds and other environmental conditions.

The underground water socket arrangement **100** as shown in **FIGS. 1** and **2** includes a cover **160.** The cover **160** of the present disclosure resembles the shape of a dome. However, the cover **160** may have any other shape known and understood in the related art without limiting the potential of the present disclosure in any manner. The cover **160** is operatively coupled with the water socket **110** and is movable between a closed position **"P1"** (as shown in **FIG. 1****)** and an open position **"P2"** (as shown in **FIG. 2****)** such that in the open state **"P2"** of the cover **160,** the cover **160** provides an access to an interior of the water socket **110.**

In some embodiment of the present disclosure, the cover **160** may pivotably couple with the water socket **110.** The cover **160** may be pivotably coupled with the water socket **110** such that in the closed position **"P1",** the cover **160** covers the interior of the water socket **110** and in the open position **"P2",** the cover **160** uncovers the interior of the water socket **110** and exposes the coupling nipple **140.** The pivotable coupling of the cover **160** with the water socket **110** may allow the cover **160** to remain connected to the water socket **110** at all the times thereby preventing misplacement of the cover **160** or loss of the cover **160.** The pivotable coupling may also prevent the detachment of the cover **160** from the water socket **110** for example, when a lawn mower may move on the ground "G" and blades of the lawn mower may create an upward suction pressure on the cover **160** when passing from above the area of the ground "G" at which the underground water socket arrangement **100** is located.

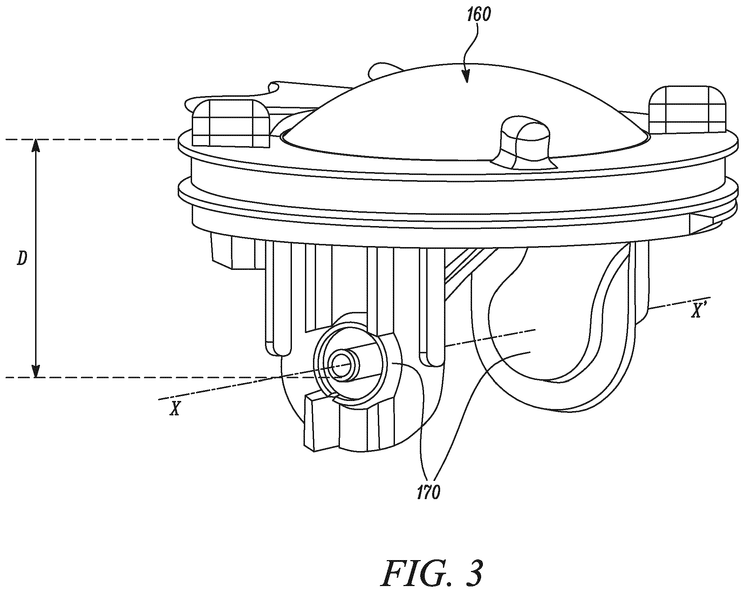

In the preferred embodiment of the present disclosure, as shown in **FIGS. 1** and **2****,** the cover **160** is operatively coupled to the water socket **110** such that the cover **160** is rotatable about an axis X-X' (as shown in **FIG. 3****).** The axis X-X' is a horizontal axis parallel to a lateral direction or perpendicular to the longitudinal direction of the body **120.** The axis X-X' is at a depth "D" below the rim **154.** The depth "D" of the axis X-X' is chosen such that the cover **160** is able to at least partially displace to the interior of the water socket **110** in the open state **"P2"** of the cover **160.** The rotatable movement of the cover **160** about the axis X-X' displaces the cover **160** at least partially inside the water socket **110** such that the cover **160** does not interfere with the fluid coupling between the water socket **110** and the hose connector.

The rotatable movement of the cover **160** about the axis X-X' is achieved by virtue of a plurality of springs **170** (as shown in **FIG. 3****)** coupled to the cover **160** and the body **120** by any means known in the art. The plurality of springs **170** may be of the form of a torsion spring to support the rotation of the cover **160.** The cover **160** automatically displaces from the open state **"P2"** of the cover **160** to the closed state **"P1"** of the cover **160** by virtue of the plurality of springs **170** when the water socket **110** is not fluidly coupled to the hose connector. The automatic closing of the cover **160** in the absence of any obstruction in the path of the cover **160** due to the fluid connection between the water socket **110** and the hose connector prevents dirt accumulation in the water socket **110.** Further, the operator may not have to remember to close the cover **110** every time after the end of the watering application.

The cover **160** further includes an extension **162** to allow displacement of the cover **160** from the closed state **"P1"** of the cover to the open state **"P2"** of the cover **160.** The extension **162** makes it easier for the operator to displace the cover **160** from the closed state **"P1"** of the cover to the open state **"P2"** of the cover **160.** The extension **162** and the cover **160** may be permanently or removably coupled to each other by any means known and understood in the related art. For example, the coupling may be by welding, gluing, using fasteners, and other well- known means.

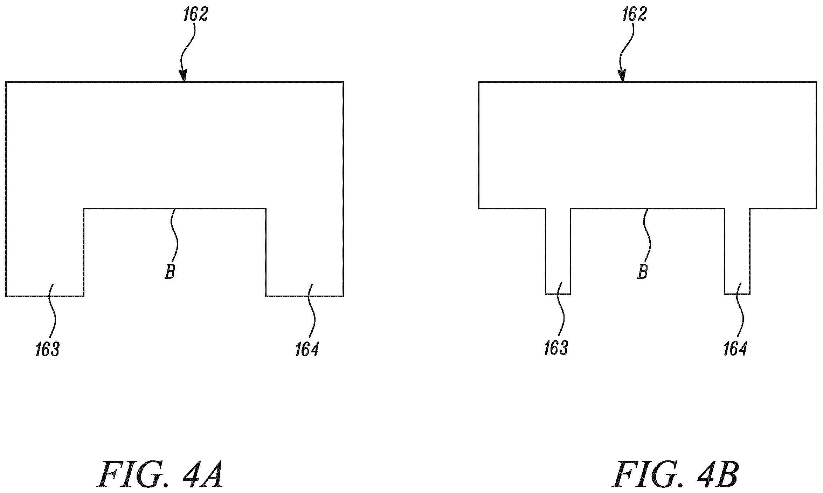

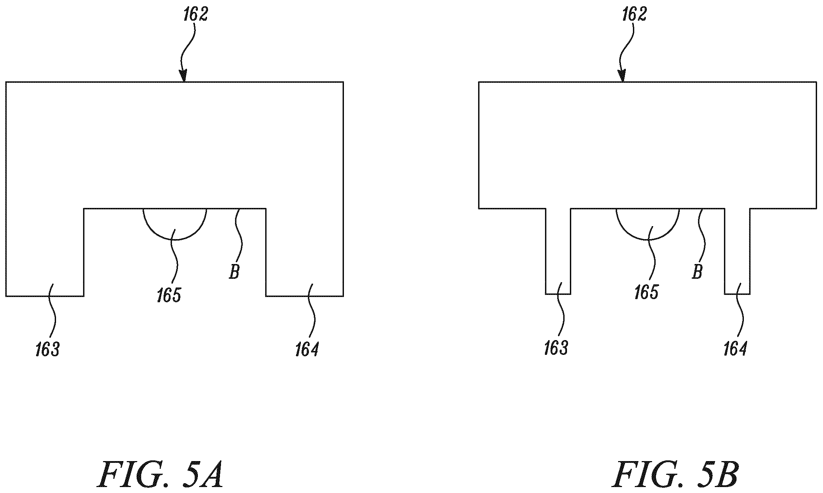

The extension **162** advantageously includes a first protrusion **163** and a second protrusion **164** spaced apart from each other and extending away from the cover **160.** The first protrusion **163** and the second protrusion **164** along with an internal boundary "B" of the extension **162** (as shown in **FIGS. 4A, 4B****,** **5A** and **5B****)** spatially arranged between the first protrusion **163** and the second protrusion **164** forms a contour. The contour formed is substantially flat with very marginal depth. The contour allows engagement of the extension **162** with the hose connector such that the hose connector when pressed with the contour firmly engages with the contour to lift or displace the cover **160** from the closed state **"P1"** of the cover **160** to the open state **"P2"** of the cover **160** such that in the open state **"P2"** of the cover **160** (as shown in **FIG. 2****)** only the extension **162** with the first protrusion **163** and the second protrusion **164** is visible to the operator from top and the remaining portion of the cover **160** is rotatably received by the interior of the water socket **110.**

Further, the concept of moving the cover **160** by use of contour and the hose connector is advantageous over the prior art such that a hand of the operator may be free at all the times and further and the operator may be prevented from any possible finger injury which may happen when the extension **162** and hence the cover **160** is lifted or moved by applying force of the finger of the operator.

In some embodiments of the present disclosure, as shown in **FIGS. 4A** and **5A****,** the first protrusion **163** and the second protrusion **164** are arranged at extremes of the extension **162.** However, in some embodiments, as shown in **FIGS. 4B** and **5B****,** the first protrusion **163** and the second protrusion **164** are arranged between the extremes of the extension **162.** The first protrusion **163** and the second protrusion **164** may be tactically arranged on the extension **162** as per the application requirements. The arrangement may be such that the hose connector to be coupled with the water socket **110** may be conveniently utilized for lifting the cover **160** from the closed state **"P1"** of the cover **160** to the open state **"P2"** of the cover **160.** The contour as discussed above may be able to provide proper gripping surface to the hose connector for lifting or displacing the cover **160.** However, in some embodiments of the present disclosure, the hose connector may not require the complete contour for gripping.

In some embodiments of the present disclosure, the first protrusion **163** and the second protrusion **164** are linearly arranged with the extension **162.** However, in some embodiments, the first protrusion **163** and the second protrusion **164** may be angularly arranged with the extension **162.** The orientation of the first protrusion **163** and the second protrusion **164** relative to one another and relative to the extension **162** may depend upon the application requirements and the feasibility constraints.

However, to improve the versatility of the product, the first protrusion **163** and the second protrusion **164** may be manually adjusted and locked when arranged in the most desired and productive position. The locking and unlocking of the first protrusion **163** and the second protrusion **164** may be done by any means known in the related art. Further, in some embodiments, the first protrusion **163** and the second protrusion **164** may be removably coupled to the extension **162** by any means known in the art. Furthermore, in some embodiments, the ends of the first protrusion **163** and the second protrusion **164** coupled to the extension **162** may be fixed but the ends of the first protrusion **163** and the second protrusion **164** disposed away from the extension **162** may be free to move. Any other coupling variation between the extension **162** and the first protrusion **163** and further between the extension **162** and the second protrusion **164** is within the scope of the present disclosure without being restrictive to the potential of the present disclosure in any manner.

In some embodiments of the present disclosure, the extension **162** includes an elevated protrusion **165** (as shown in **FIGS. 5A** and **5B****)** arranged between the first protrusion **163** and the second protrusion **164** such that depth of the elevated protrusion **165** is more than the depth of the first protrusion **163** and the second protrusion **164.** The elevated protrusion **165** adds to the versatility of the extension **162.** The elevated protrusion **165** allows to bring the cover **160** from the closed state **"P1"** of the cover **160** to the open state **"P2"** of the cover **160** by use of finger of the operator. The elevated protrusion **165** is permanently or removably coupled to the extension **162** by any coupling means known in the related art. The elevated protrusion **165** further acts as a barrier against the unwanted foreign elements present in the environment and further ensure the prevention of entry of the unwanted foreign elements into the interior of the water socket **110** to maintain proper functionality and longevity of the water socket **110.**

Further, the depth of the elevated protrusion **165** may be between **5** mm and **8** mm and the depth of the first protrusion **163,** and the second protrusion **164** may be between **1** mm and **2** mm. The depth of the elevated protrusion **165** may be in general just enough to provide the gripping surface for the finger of the operator. Further, the depth of the first protrusion **163** and the second protrusion **164** is just enough to provide the gripping surface to the hose connector such that upon pressing the hose connector against the gripping surface, the cover **160** moves from the closed state "P1" of the cover **160** to the open state "P2" of the cover **160.** Further, the elevated protrusion **165** does not interfere with the regular usage of the first protrusion **163** and the second protrusion **165.**

In some embodiments, the elevated protrusion **165** is semi-circular in shape. The semi-circular shape conforms somewhat to the shape of the finger of the operator and thus makes its application easy and ergonomic for the operator. However, any other shape of the elevated protrusion **165** is within the scope of the present disclosure. Further, the elevated protrusion **165** may be integrally or removably formed with the extension **162.**

Thus, the present disclosure provides the underground water socket arrangement **100** that is embedded in the ground "G" and includes the cover **160** to prevent ingress of unwanted foreign elements, such as, but not limited to, dirt or mud, into the interior of the water socket **110** when the water socket **110** is not fluidly coupled to any hose connector for various industrial and domestic applications. The cover **160** prevents the ingress of unwanted foreign elements into the interior of the water socket **110** when the cover **160** is in the closed state **"P1".** The cover **160** prevents the components such as, the coupling nipple **140,** present in the water socket **110** and the surrounding areas of the components from contamination with the foreign elements and allows for proper and secure coupling of the water socket **110** with the hose connector or other similar watering component known and understood in the related art. The cover **160** further prevents possible damage to the components present in the interior of the water socket **110.**

The cover **160** is easily and ergonomically displaced or lifted from the closed state **"P1"** of the cover **160** to the open state **"P2"** of the cover **160.** The cover **160** includes the extension **162** with the first protrusion **163** and the second protrusion **164** such that the first protrusion **163** and the second protrusion **164** along with the internal boundary "B" of the extension **162** forms the contour. The contour allows engagement of the extension **162** with the hose connector. The hose connector when pressed with the contour firmly engages with the contour to lift or displace the cover **160** from the closed state **"P1"** of the cover **160** to the open state **"P2"** of the cover **160.** The depth of the extension **162** or the contour is small enough to keep the design of the underground water socket arrangement **100** compact and large enough to be gripped by the portion of the hose connector. The operator operating the underground water socket arrangement **100** is not required to use fingers to lift the cover **160** and hence the operator is prevented from potential injuries.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Underground Water Socket Arrangement
- **110**: Water Socket
- **120**: Body
- **130**: Water Inlet
- **140**: Coupling Nipple
- **150**: Annular Surface
- **152**: Housing Ring
- **154**: Rim
- **156**: Protrusions
- **160**: Cover
- **162**: Extension
- **163**: First Protrusion
- **164**: Second Protrusion
- **165**: Elevated Protrusion
- **170**: Spring
- **G**: Ground
- **B**: Internal Boundary
- **X-X'**: Axis
- **D**: Depth

## Claims

1. An underground water socket arrangement **(100)** comprising:
a water socket **(110)** which is embeddable in the ground **(G);**
a cover **(160)** operatively coupled with the water socket **(110),**
wherein the cover **(160)** includes an extension **(162)** to allow displacement of the cover **(160)** from a closed state **(P1)** of the cover **(160)** to an open state **(P2)** of the cover **(160);** and
wherein in the open state **(P2)** of the cover **(160),** the cover **(160)** provides access to an interior of the water socket **(110);**
wherein the extension **(162)** includes a first protrusion **(163)** and a second protrusion **(164)** spaced apart from each other and
extending away from the cover **(160)** such that the first protrusion **(163)** and the second protrusion **(164)** along with an internal boundary **(B)** of the extension **(162)** spatially arranged between the first protrusion **(163)** and the second protrusion **(164),** form a contour,
**characterized in that:**
the contour allows engagement of the extension **(162)** with a watering component to be coupled with the water socket **(110),**
wherein the contour provides a gripping surface to the watering component for lifting or displacing the cover **(160).**

2. The underground water socket arrangement **(100)** of claim 1, wherein the first protrusion **(163)** and the second protrusion **(164)** are arranged at extremes of the extension **(162).**

3. The underground water socket arrangement **(100)** of claim 1, wherein the first protrusion **(163)** and the second protrusion **(164)** are arranged between the extremes of the extension **(162).**

4. The underground water socket arrangement **(100)** of any of the preceding claims, wherein the first protrusion **(163)** and the second protrusion **(164)** are linearly arranged with the extension **(162).**

5. The underground water socket arrangement **(100)** of any of the preceding claims, wherein the first protrusion **(163)** and the second protrusion **(164)** are angularly arranged with the extension **(162).**

6. The underground water socket arrangement **(100)** of any of the preceding claims, wherein the extension **(162)** includes a further protrusion **(165)** arranged between the first protrusion **(163)** and the second protrusion **(164)** .

7. The underground water socket arrangement **(100)** of claim 6, wherein the further protrusion **(165)** is at least partially elevated in respect to an annular surface (150) and/or a rim (154) to form a free space between them.

8. The underground water socket arrangement **(100)** of claims 6 or 7, wherein the further protrusion **(165)** is semi-circular in shape.

9. The underground water socket arrangement **(100)** of any of the preceding claims, wherein the cover **(160)** is pivotably coupled with the water socket **(110).**

10. The underground water socket arrangement **(100)** of any of the preceding claims, wherein the cover **(160)** in open state **(P2)** is at least partially displaced to the interior of the water socket **(110).**

11. The underground water socket arrangement **(100)** of any of the preceding claims, wherein the cover **(160)** automatically displaces from the open state (P2) of the cover **(160)** to the closed state **(P1)** of the cover **(160)** by virtue of a plurality of springs **(170)** when the water socket **(110)** is not fluidly coupled to a watering component.

12. The underground water socket arrangement **(100)** of any of the preceding claims, wherein the water socket **(110)** includes a filter chamber disposed proximate to a water inlet **(130)** of the water socket **(110).**

## Patentansprüche

1. Unterirdische Wassersteckdosenanordnung **(100),** umfassend:
eine im Boden **(G)** einbaubare Wassersteckdose **(110);**
eine Abdeckung **(160),** die betriebsmäßig mit der Wassersteckdose **(110)** gekoppelt ist, wobei die Abdeckung **(160)** eine Verlängerung **(162)** einschließt, um eine Verschiebung der Abdeckung **(160)** aus einem geschlossenen Zustand **(P1)** der Abdeckung **(160)** in einen offenen Zustand **(P2)** der Abdeckung **(160)** zu ermöglichen; und
wobei im geöffneten Zustand **(P2)** der Abdeckung **(160),** die Abdeckung **(160)** Zugang zum Inneren der Wassersteckdose **(110)** ermöglicht;
wobei die Verlängerung **(162)** einen ersten Vorsprung **(163)** und einen zweiten Vorsprung **(164)** voneinander beabstandet und sich von der Abdeckung **(160)** weg erstreckend einschließt, so dass der erste Vorsprung **(163)** und der zweite Vorsprung **(164)** zusammen mit einer inneren Grenze **(B)** der Erweiterung **(162)** räumlich angeordnet zwischen dem ersten Vorsprung **(163)** und dem zweiten Vorsprung **(164)** eine Kontur bilden,
**dadurch gekennzeichnet, dass:**
die Kontur das Einrasten der Verlängerung **(162)** mit einer Bewässerungskomponente zur Ankopplung an die Wassersteckdose **(110)** ermöglicht, wobei die Kontur eine Grifffläche für die Bewässerungskomponente zum Anheben oder Verschieben der Abdeckung **(160)** bietet.

2. Unterirdische Wassersteckdosenanordnung **(100)** nach Anspruch 1,
wobei der erste Vorsprung **(163)** und der zweite Vorsprung **(164)** an den Enden der Verlängerung **(162)** angeordnet sind.

3. Unterirdische Wassersteckdosenanordnung **(100)** nach Anspruch 1,
wobei der erste Vorsprung **(163)** und der zweite Vorsprung **(164)** zwischen den Enden der Verlängerung **(162)** angeordnet sind.

4. Unterirdische Wassersteckdosenanordnung **(100)** nach einem der vorstehenden Ansprüche, wobei der erste Vorsprung **(163)** und der zweite Vorsprung **(164)** linear mit der Verlängerung **(162)** angeordnet sind.

5. Unterirdische Wassersteckdosenanordnung **(100)** nach einem der vorstehenden Ansprüche, wobei der erste Vorsprung **(163)** und der zweite Vorsprung **(164)** winklig mit der Verlängerung **(162)** angeordnet sind.

6. Unterirdische Wassersteckdosenanordnung **(100)** nach einem der vorstehenden Ansprüche, wobei die Verlängerung **(162)** einen weiteren Vorsprung **(165)** einschließt, der zwischen dem ersten Vorsprung **(163)** und dem zweiten Vorsprung **(164)** angeordnet ist.

7. Unterirdische Wassersteckdosenanordnung **(100)** nach Anspruch 6, wobei der weitere Vorsprung **(165)** mindestens teilweise in Bezug auf eine ringförmige Oberfläche (150) und/oder einem Rand (154) erhöht ist, um einen freien Raum zwischen ihnen zu bilden.

8. Unterirdische Wassersteckdosenanordnung **(100)** der Ansprüche 6 oder 7, wobei der weitere Vorsprung **(165)** eine halbkreisförmige Form hat.

9. Unterirdische Wassersteckdosenanordnung **(100)** nach einem der vorstehenden Ansprüche, wobei die Abdeckung **(160)** schwenkbar mit der Wassersteckdose **(110)** gekoppelt ist.

10. Unterirdische Wassersteckdosenanordnung **(100)** nach einem der vorstehenden Ansprüche, wobei die Abdeckung **(160)** im geöffneten Zustand **(P2)** mindestens teilweise in das Innere der Wassersteckdose **(110)** verlagert wird.

11. Unterirdische Wassersteckdosenanordnung **(100)** nach einem der vorstehenden Ansprüche, wobei die Abdeckung **(160)** durch eine Vielzahl von Federn **(170)** automatisch aus dem geöffneten Zustand **(P2)** der Abdeckung **(160)** in den geschlossenen Zustand **(P1)** der Abdeckung **(160)** verschoben wird, wenn die Wassersteckdose **(110)** nicht fluidisch mit einer Bewässerungskomponente gekoppelt ist.

12. Unterirdische Wassersteckdosenanordnung **(100)** nach einem der vorstehenden Ansprüche, wobei die Wassersteckdose (110) eine Filterkammer einschließt, die in der Nähe eines Wassereinlasses **(130)** der Wassersteckdose **(110)** angeordnet ist.

## Revendications

1. Agencement de prise d'eau souterraine (100) comprenant :
une prise d'eau (110) qui peut être enfoncée dans le sol (G) ;
un couvercle **(160)** accouplé de manière fonctionnelle à la prise d'eau **(110),** dans lequel le couvercle **(160)** comporte une extension **(162)** pour permettre le déplacement du couvercle **(160)** d'un état fermé **(P1)** du couvercle **(160)** vers un état ouvert **(P2)** du couvercle **(160)** ; et
dans lequel, à l'état ouvert **(P2)** du couvercle **(160),** le couvercle **(160)** donne accès à un intérieur de la prise d'eau **(110)** ;
dans lequel l'extension **(162)** comporte une première saillie **(163)** et une seconde saillie **(164)** espacées l'une de l'autre et s'étendant à l'écart du couvercle **(160)** de telle sorte que la première saillie **(163)** et la seconde saillie **(164)** ainsi qu'une limite interne **(B)** de l'extension **(162)** agencée dans l'espace entre la première saillie **(163)** et la seconde saillie **(164),** forment un contour,
**caractérisé en ce que** :
le contour permet la mise en prise de l'extension **(162)** avec un élément d'arrosage à accoupler avec la prise d'eau **(110),** dans lequel le contour fournit une surface de préhension à l'élément d'arrosage pour soulever ou déplacer le couvercle **(160).**

2. Agencement de prise d'eau souterraine **(100)** selon la revendication 1, dans lequel la première saillie **(163)** et la seconde saillie **(164)** sont agencées aux extrémités de l'extension **(162).**

3. Agencement de prise d'eau souterraine **(100)** selon la revendication 1, dans lequel la première saillie **(163)** et la seconde saillie **(164)** sont agencées entre les extrémités de l'extension **(162).**

4. Agencement de prise d'eau souterraine **(100)** selon l'une quelconque des revendications précédentes, dans lequel la première saillie **(163)** et la seconde saillie **(164)** sont agencées linéairement avec l'extension **(162).**

5. Agencement de prise d'eau souterraine **(100)** selon l'une quelconque des revendications précédentes, dans lequel la première saillie **(163)** et la seconde saillie **(164)** sont agencées de manière angulaire avec l'extension **(162).**

6. Agencement de prise d'eau souterraine **(100)** selon l'une quelconque des revendications précédentes, dans lequel l'extension **(162)** comporte une autre saillie **(165)** agencée entre la première saillie **(163)** et la seconde saillie **(164)**

7. Agencement de prise d'eau souterraine **(100)** selon la revendication 6, dans lequel l'autre saillie **(165)** est au moins partiellement surélevée par rapport à une surface annulaire (150) et/ou un rebord (154) pour former un espace libre entre eux.

8. Agencement de prise d'eau souterraine **(100)** selon les revendications 6 ou 7, dans lequel l'autre saillie **(165)** est de forme semi-circulaire.

9. Agencement de prise d'eau souterraine **(100)** selon l'une quelconque des revendications précédentes, dans lequel le couvercle **(160)** est accouplé de manière pivotante à la prise d'eau **(110)**

10. Agencement de prise d'eau souterraine **(100)** selon l'une quelconque des revendications précédentes, dans lequel le couvercle **(160)** à l'état ouvert **(P2)** est au moins partiellement déplacé vers l'intérieur de la prise d'eau **(110).**

11. Agencement de prise d'eau souterraine **(100)** selon l'une quelconque des revendications précédentes, dans lequel le couvercle **(160)** se déplace automatiquement de l'état ouvert **(P2)** du couvercle **(160)** à l'état fermé **(P1)** du couvercle **(160)** grâce à une pluralité de ressorts **(170)** lorsque la prise d'eau **(110)** n'est pas accouplée de manière fluidique à un élément d'arrosage.

12. Agencement de prise d'eau souterraine **(100)** selon l'une quelconque des revendications précédentes, dans lequel la prise d'eau (110) comporte une chambre de filtre disposée à proximité d'une entrée d'eau **(130)** de la prise d'eau **(110).**
